# EUROPEAN PATENT APPLICATION

(11) **EP 2 409 566 A1**
(43) Date of publication of application: **25.01.2012**
(21) Application number: 10007639.7
(22) Date of filing: 22.07.2010
(51) Int. Cl.: A01M 21/04

(54) **Destruction of invasive plants and weeds**

(71) Applicant: Linde AG, 80331 München (DE)
(72) Inventor: Wigfall, Tim, S42 6LQ Chesterfield Derbyshire (GB)
(74) Representative: Kasseckert, Rainer

(57) **Abstract**

Method of destroying plants/weeds, especially Japanese Knotweed by freezing the contaminated soil and plants in situ using a cryogen, like nitrogen.

## Description

The invention relates to a method of destroying vigorous and invasive plants/ weeds, especially Japanese Knotweed (Fallopia japonica).

Because they have no natural predetors, imported, non native, plants often spread very quickly and may squeeze out domestic species. Japanese Knotweed is a very vigorous and invasive plant/weed, which is estimated to cause millions of pounds worth of cost and damage. It may cause serious damage to underground manmade structures (e.g. drains, foundations, walls etc) due to the dense and searching/penetrating nature of the root system. Japanese Knotweed has evolved to survive in harsh nutrient poor environments, it is an extremely vigorous plant that is very difficult to control or destroy, and even a mere 2 cm strand of root left in the soil can lead to rapid plant regeneration. In the UK it is illegal to knowingly cause the spread of the plant and anyone owning land with Japanese Knotweed on it is responsible for keeping it under control. To "decontaminate" land is very costly and difficult. Building control and local planning policies often encourage the redevelopment of "Brownfield" (reclaimed land). Such land often harbors Japanese Knotweed which is a vigorous and opportunistic colonizer. The presence of Japanese Knotweed currently represents a serious economic threat/problem to developers who by their activities could cause spread of the plant and also risk damage to and insurance difficulties with any structures that they build.

Current methods for the eradication of Japanese Knotweed include:
i) The use of chemical herbicides - which can be effective, but often requires 3 years selective application to destroy the plant. This route can be harmful to the environment and leaching of chemicals represents a particular risk to natural water courses.
ii) Digging-out, often with the installation of an impervious barrier in the replaced material - all the material removed has to be disposed of under license by a specialist contractor as a "Controlled Waste" and requires special landfill precautions too. This approach is costly and also risks the spread of the plant as material is moved. It also has obvious environmental impacts (noise, road traffic, dust, dirt, landfilling, import of replacement soil etc.).
iii) A third option, cutting back surface vegetation, can be used to drain the plants resources. This approach has the benefit of not using chemicals however it may take 10 or more years to result in eradication and is therefore impractical from a developer's perspective..
iv) Biological trials are also underway to introduce specialist predatory insects which will deplete the Japanese Knotweed's resources. This is a long term general environmental measure with similar anticipated timescales as option iii and involves the risk of effects on the environment of introducing non indigenous species.

The WO 20100008286 proposes the extermination of weed with a sort of hood, spraying liquefied gas onto the contaminated ground.

The US 3,263,439 discloses the use of refrigeration for killing weeds.

The DE 2 960 7745 proposes the dispensing of liquid nitrogen onto the ground and the causing of an icing of the root near the surface of the weed.

In the field of harvesting cotton plants the US 4, 322,910 describes the defoliation with nitrogen.

In the construction industry it is known to stabilize ground by the so-called ground-freezing process with liquid nitrogen [brochure of Linde AG: Technische Gase für die Bauindustrie, February 2009, pages 10 and 11]. Freezing lances or pipes are buried in the soil. Liquid nitrogen (LIN) is fed through an arrangement of concentric pipes/ freeze lances. The LIN cools and freezes the soil and water within it by drawing heat from the soil (due to the latent heat of vaporization of the liquid nitrogen). The frozen ground is thereby stabilized and made watertight. Either vertical pits can be excavated or horizontal ducts can be driven.

Here an example for ground freezing:

### Process Description:

Installation: Copper freeze pipes with a standard diameter of 2" (54 mm) are installed at regular spacing intervals (75cm radius). On the inside, smaller interior pipes with diameters of ½" (10-12 mm) are installed.

Freezing: LIN is fed into the interior pipes through insulated supply lines. The LIN vaporizes, with 1 kg of LIN extracting about 200 kJ of energy from the surrounding soil, causing it to cool and freeze. The vaporized cold nitrogen (i.e. exhaust gas) also extracts approximately another 100 kJ from the ground. After about one week, this process forms a frozen wall with a diameter of about 1 m. This so-called "establishing phase" lasts four to seven days, and about 300 - 500 gal (1.500-2.500 L) of LIN is used to freeze 1 cubic yard (0.75 m³) of soil.

### Process Benefits:

Soil-freezing with LIN offers numerous advantages:
- With liquid nitrogen the temperature of the soil can be reduced substantially lower than with brine freezing.
- Speed of freeze - LIN's low temperature -320°F (-196°C) allows soil-freezing to be completed in four to seven days - substantially quicker than the one month required for the brine freezing process.
- Investments in a LIN freezing plant are only a fraction of those to install a brine freezing unit.
- The process is environmental friendly, with no hazardous substances, vibrations, or ground water pollution or extraction.
- The process is suitable for automation.
- Systems have a high tolerance to soil humidity (5-100 %).
- The solidification of the soil is only temporary; after shutting down the LIN supply, frozen soil will melt in a few weeks.

On pages 18 and 20 of the said Linde brochure the following applications are disclosed:
Cryogenic sampling, analyze of sedimentation and conserving of archeological findings like a skeleton of a fossil.

The problem that is addressed by the invention is: How to provide a quick and effective method for the eradication of unwanted plants/weeds without the release of potentially harmful chemical biocides into the environment.

This problem is solved by a process with the steps of claim 1. Further embodiments are shown in the claims 2 and 3.

All substances which have an extremely low temperature may be used as a cryogen. Known cryogens are liquid hydrogen with a temperature of -252°C, liquid nitrogen with a temperature of -195°C, liquid oxygen with a temperature of -182°C, liquid argon and dry ice (frozen carbon dioxide with a sublimation point of -87,5°C). Also liquid air or mixtures of the said gases can be used with a boiling point around -192°C. For freezing applications it is less preferable to use combustible gases such as hydrogen or oxygen.

In an embodiment of the invention a plurality of freezing lances are introduced in the vicinity of the plant's root. The cryogen is fed through the lances to freeze the ground and the roots contained within it. The freezing process causes permanent damage to the cell structure of the plant's roots, causing it to die by inflicting irreparable cell damage through the freezing of water within the cells and also starving the plant of water (by immobilizing it in the soil as ice).

We propose to use a cryogen for ground freezing process as a method of destroying Japanese Knotweed. The rapid rate of freezing and depth of penetration of the frozen area will be designed to cause irreparable damage to the plant tissue due to the rupture of cells. While under normal circumstances the plant's root would be protected from frost/freezing as they are insulated by the top soil, with our ground freezing method we have the potential to control the rate of freeze, depth of freeze and duration.

### Process Benefits:

1) Effectiveness - assured eradication, leaving land free from potential re-growth = economic benefit in terms of being able to progress rapidly with development work after treatment is completed.
2) Speed - damaging effects of freezing are very quick = economic benefit in terms of being able to progress rapidly with development work after treatment is completed.
3) Environmentally less disruptive than alternative excavation type alternatives, with no release of any biocide chemicals into the environment

I.e. liquid nitrogen (with a boiling point of -196°C) is passed into the ground through copper heat exchange pipes. The extreme cold causes freezing of the soil and anything containing water within it (including plant matter). The freeze rods are sunk at suitable intervals and depth to cause freezing of the entire "infected" soil area. Freezing not only causes damage to the cell structure/plant tissue, it also deprives the plant of water thus having the combined effect. Killing not only the Japanese Knotweed plant itself, but also any rhizomes from which it would normally regenerate.

The invention is described in more detail with two figures:
Figure 1 shows schematically the use of freezing lances in the soil,
Figure 2 shows the effect of a plurality of freezing lances.

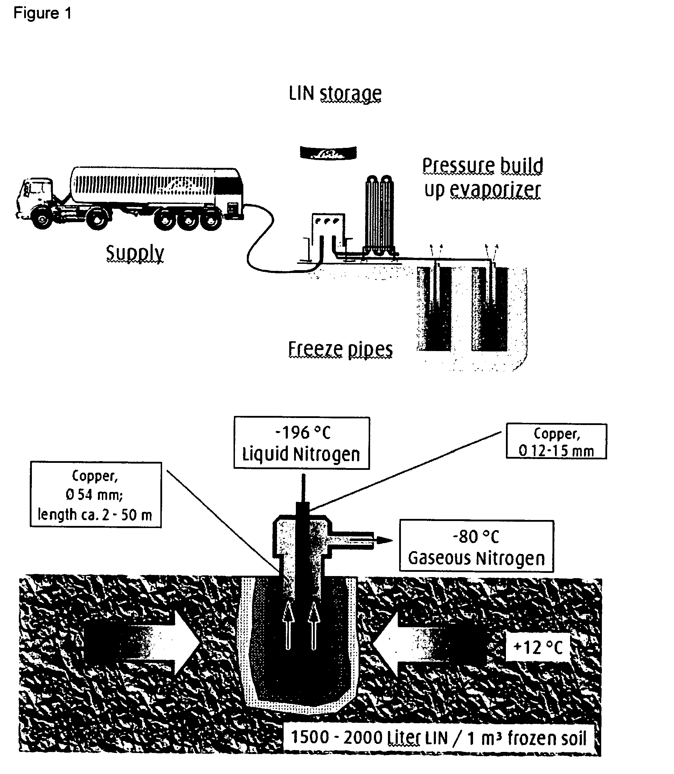

Fig. 1 shows on the left hand the liquid nitrogen supply with a road tanker filling a standing tank for liquid nitrogen (LIN-Tank). From this LIN tank the liquid nitrogen is fed into the freezing pipes, the schematical built up of these is shown on the right-hand side of figure 1. The freezing pipes or freezing lances can have a length of up to 50 m and are made with double wall or concentrically whereby, i.e., in the interior pipe the cold liquid nitrogen is fed downward whereby it gives up a part of its cold and evaporates. The evaporated nitrogen feeds upwards, exiting the freezing lance and leaves at around minus 80 °C as gaseous nitrogen. The phase transition between liquid and gas can occur in the inner or in the outer pipe. Heat is flowing from the ground into the pipe and the temperature of the soil, which is surrounding the lance, becomes colder and colder, reaching temperatures below 0 °C, at which point the water contained in the soil starts to freeze. Its roots frozen and permanently damaged, the plant is destroyed.

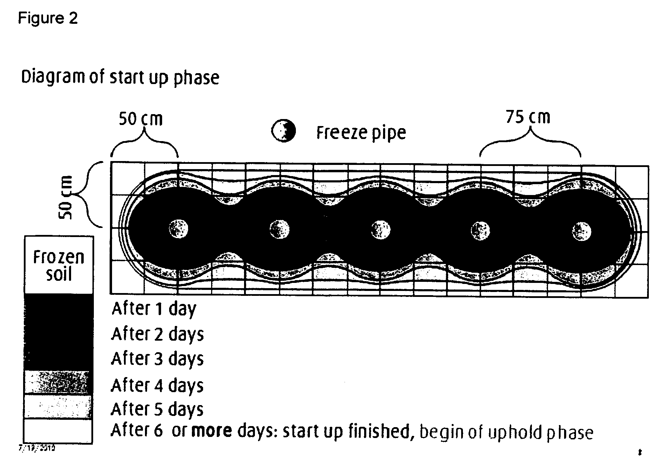

In Fig. 2 five freezing pipes are shown schematically side-by-side. The pictured pipes are configured such that the radius of the ground they freeze develops and ultimately the frozen areas join to produce a fully frozen mass throughout the intended area The schematic shows the extent of the frozen region after the predetermined period of time. After one day roughly 22 cm from every freezing pipe. After two days the frozen regions approach to each other, after three days the frozen bodies form a closed wall (the so called "frost body"). After four, five or six days the frost body is complete and all roots and undesired plants are destroyed.

## Claims

1. Method of destroying plants/weeds, especially Japanese Knotweed by freezing the contaminated soil and plants in situ using a cryogen.

2. Method according to claim 1, **characterized by** liquid air, liquid nitrogen, liquid argon or carbon dioxide as cryogen.

3. Method of claim 1 or claim 2, **characterized by** a plurality of freezing lances which are buried in the soil in the vicinity of the roots, through which a cryogen is fed.
